# EUROPÄISCHE PATENTSCHRIFT

(11) **EP 0 705 456 B1**
(45) Veröffentlichungstag und Bekanntmachung des Hinweises auf die Patenterteilung: **01.09.1999**
(21) Anmeldenummer: 94920921.7
(22) Anmeldetag: 10.06.1994
(51) Int. Cl.: G05B 19/04, G05B 19/418

(54) **PROZESSLEITVERFAHREN, INSBESONDERE FÜR EINE INDUSTRIELLE GROSSANLAGE**
PROCESS CONTROL METHOD, IN PARTICULAR FOR LARGE INDUSTRIAL PLANTS
PROCEDE DE GESTION DE PROCESSUS INDUSTRIELS, NOTAMMENT POUR GRANDES INSTALLATIONS INDUSTRIELLES

(30) Priorität: 17.06.1993 DE 4320124
(43) Veröffentlichungstag der Anmeldung: 10.04.1996
(73) Patentinhaber: Ruhrkohle Aktiengesellschaft, 45128 Essen (DE)
(72) Erfinder: STEWEN, Wilhelm, D-46147 Oberhausen (DE); MEILER, Erwin, D-90411 Nürnberg (DE); VON RÜDEN, Hans-Josef, D-91052 Erlangen (DE); SCHREITER, Klaus-Dieter, D-91056 Erlangen (DE)
(74) Vertreter: Epping, Wilhelm, Dr.-Ing.
(86) Internationale Anmeldenummer: EP9401899
(87) Internationale Veröffentlichungsnummer: WO9500889

(56) Entgegenhaltungen:
- US-A- 4 835 699
- ZWF CIM ZEITSCHRIFT FüR WIRTSCHAFTLICHE FERTIGUNG UND AUTOMATISIERUNG, Bd.87, Nr.9, September 1992, MüNCHEN, DE Seiten 532 - 536, XP000297154 R.LANGMANN 'Prozessaktive Bedienobjekte'

## Beschreibung

Die Erfindung betrifft ein Prozeßleitverfahren, insbesondere für eine industrielle Großanlage, wobei zur Prozeßbedienung Daten von Bedienmitteln in einer Bedien- und Beobachtungsebene über ein Bussystem zu Automatisierungsgeraten in einer Prozeßebene übertragen werden und zur Prozeßbeobachtung Daten von den Automatisierungsgeräten in der Prozeßebene zu Anzeigemitteln in der Bedien- und Beobachtungsebene übertragen werden.

In automatisiert arbeitenden industriellen Großanlagen wird in der Prozeßebene eine Vielzahl von Einzelfunktionen durch Automatisierungsgerate zusammenwirkend gesteuert und geregelt. Die einzelnen Automatisierungsgerate kommunizieren über ein Bussystem miteinander und mit einer Prozeßleiteinheit in einer Bedien- und Beobachtungsebene, von der aus Prozeßbedienungen, d.h. Eingriffe in den automatisch ablaufenden Prozeß vorgenommen werden und der Prozeß beobachtet wird. Zwischen der Bedien- und Beobachtungsebene und der Prozeßebene werden sehr große Datenmengen übertragen, so daß sich die Aufgabe stellt, diese Daten in einer Datenstruktur zu übertragen, die trotz der großen Datenmengen einen schnellen Zugriff auf die Daten ermöglicht und dabei so transparent ist, daß sie sich leicht an Änderungen und Erweiterungen der Anlage anpassen läßt.

Gemäß der Erfindung wird die Aufgabe dadurch gelöst, daß bei dem Prozeßleitverfahren der eingangs angegebenen Art die Daten zur Prozeßbedienung in Abhängigkeit von unterschiedlichen vorgegebenen Bedienarten in unterschiedliche Datenarten unterteilt und nach diesen blockweise sortiert von der Bedien- und Anzeigeebene zur Prozeßebene übertragen werden, und daß in den Automatisierungsgeraten enthaltene Programme zur Ausführung der Bedienung auf die vorsortierten Daten zugreifen. Durch die Vorsortierung der von der Bedien- und Beobachtungsebene zur Prozeßebene übertragenen Daten nach unterschiedlichen Bedienarten wird in der Prozeßebene ein schneller Zugriff auf die Daten ermöglicht.

Dabei wird in vorteilhafter Weise in der Prozeßebene bei den Einzelfunktionen der Anlage zwischen Meß- und Regelvorgängen und Steuervorgängen unterschieden, wobei dementsprechend die Daten zur Prozeßbedienung in solche für Meß- und Regelvorgange und solche für Steuervorgänge unterteilt werden.

Eine weitere Unterteilung der Daten zur Prozeßbedienung findet vorzugsweise in solche für zu übertragende numerische und solche für binäre Schalthandlungen statt.

Die Prozeßbedienung erfolgt vorzugsweise aus unterschiedlichen, in der Bedien- und Beobachtungsebene zur Anzeige gebrachten Bildern der Anlage heraus. wie z.B. Regelkreisbilder, Bilder mit Meßwertdarstellungen (Meßwertgruppenbilder) und Steuerungsbilder, die unterschiedliche Anlagenteile hierarchisch gegliedert zeigen. Dabei sind unterschiedlichen Bildtypen entsprechende unterschiedliche Bedienarten oder - möglichkeiten zugeordnet, wobei die Daten zur Prozeßbedienung in Abhängigkeit von den Bildtypen und den ihnen zugeordneten Bedienarten sortiert sind. So ist beispielsweise aus Regelkreisbildern nur die Vorgabe von Reglerwerten, wie z.B. Sollwerte oder Regelparameter möglich, die als numerische Meß- und Regelwerte in einem eigenen Datenblock einsortiert sind. In einem anderen Datenblock sind Daten für binäre Schaltvorgänge wie das Ein- und Ausschalten von Antrieben einsortiert, die beispielsweise nur aus Steuerungsbildern heraus bedient werden können. Dabei sind die vorstehend erwähnten Sortierungskriterien bereits miteinander verknüpft.

Die Daten sind innerhalb der Blöcke vorzugsweise durch Kennungen in Abhängigkeit von der Struktur der Anlage sortiert, so daß eine schnelle Zuordnung der Daten zu den zu bedienenden Anlagenbereichen, Funktionsgruppen oder Funktionseinheiten entsprechend der hierarchischen Gliederung der Anlage möglich ist.

Zur Bestätigung des Empfangs der Daten zur Prozeßbedienung in den einzelnen Automatisierungsgeraten der Prozeßebene ist entsprechend einer vorteilhaften Weiterbildung des erfindungsgemäßen Verfahrens vorgesehen, daß den zur Prozeßbedienung in die Prozeßebene übertragenen vorsortierten Daten dort Bedienprotokollnummern zugeordnet werden und daß die Daten mit den Bedienprotokollnummern in die Bedien- und Beobachtungsebene zurückübertragen werden. Durch die Zuordnung der Bedienprotokollnummern erfolgt eine Umbewertung bzw. Umsortierung der übertragenen Daten in Anpassung an die Struktur des Bedienprotokolls, um nunmehr in der Bedien- und Beobachtungsebene einen schnellen Zugriff auf die zurückgesandten Daten zu haben. Bei der Nummernzuordnung ermöglichen feste Nummernbereiche mit freien Plätzen eine selbständige Einordnung der Daten und wirken so mit datenselektiven Schnittstellen zusammen, die, wie aus der DE-OS 41 25 374 bekannt, zur Datenreduktion auf dem Bussystem dienen können.

Zur Visualisierung des Prozeßgeschehens werden in der Prozeßebene den Prozeßzustand beschreibende Daten in Abhangigkeit von unterschiedlichen vorgegebenen Zustandsarten unterteilt und nach den Zustandsarten blockweise sortiert zyklisch zur Bedien- und Beobachtungsebene übertragen. Dadurch wird ein schneller Zugriff auf die Daten in der Bedien- und Beobachtungsebene erreicht.

In diesem Zusammenhang ist vorzugsweise vorgesehen, daß in der Bedien- und Beobachtungsebene zur Prozeßbeobachtung unterschiedliche Bildtypen für unterschiedliche Zustandsarten erzeugt werden und daß die von der Prozeßebene zur Bedien- und Beobachtungsebene zyklisch übertragenen Daten nach den, den unterschiedlichen Bildtypen zugeordneten Zustandsarten sortiert sind. So werden z.B. Regelkreise in Regelkreisbildern dargestellt und die zugehörigen Reglerwerte wie Sollwerte, Istwerte und Regelparameter in einem eigenen Datenblock übertragen, der selbst wiederum nach unterschiedlichen Daten wie Meßwerte und sonstige numerische Werte unterteilt sein kann.

Zur näheren Erläuterung der Erfindung wird im folgenden auf die Figuren der Zeichnung bezug genommen. Im einzelnen zeigen:
- FIG 1: ein Beispiel für die Automatisierungsstruktur einer industriellen Anlage mit einer Bedien- und Beobachtungsebene und einer Prozeßebene,
- FIG 2: ein Beispiel für die Datenbehandlung in der Bedien- und Beobachtungsebene,
- FIG 3: ein Beispiel für eine Struktur von unterschiedlichen Bildern zur Darstellung des beobachteten Prozesses in der Bedien- und Beobachtungsebene und
- FIG 4: ein Beispiel für die Datenbehandlung in der Prozeßebene.

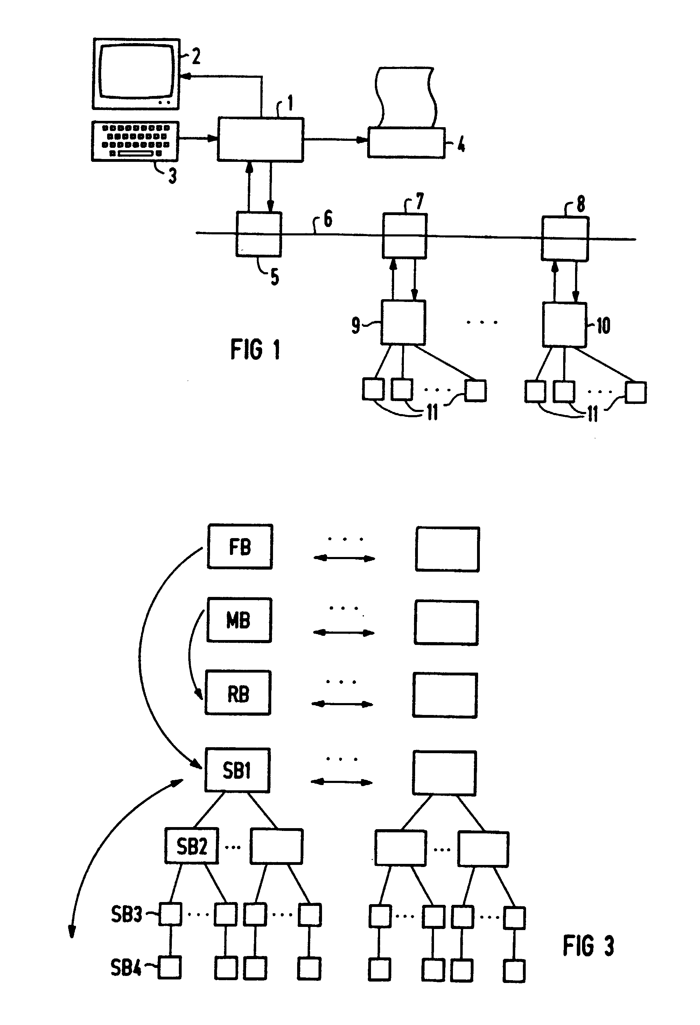

FIG 1 zeigt einen Teil aus einer Automatisierungsstruktur einer industriellen Großanlage, wie sie beispielsweise aus der DE-OS 41 25 374 bekannt ist. In einer Bedien- und Beobachtungsebene ist eine Prozeßleiteinheit 1 mit einem Monitor 2, einer Tastatur 3 und einem Drucker 4 angeordnet. Der Monitor 2 und der Drucker 4 dienen zur Prozeßbeobachtung bzw. zur Protokollierung von Bedienungen des Prozesses, die über die Tastatur 3 erfolgen. Es können auch mehrere derartige Ein- und Ausgabegeräte vorgesehen werden. Die Prozeßleiteinheit 1 ist über ein Koppelelement 5 mit einem Bussystem 6 verbunden, an dem in einer Prozeßebene, wiederum über Koppelelemente 7,8, eine Vielzahl von Automatisierungsgeraten 9,10 angeschlossen sind. Diese können, wie dies in der DE-OS 41 25 374 beschrieben ist, entsprechend der Struktur der Anlage zu Gruppen zusammengefaßt sein, wobei vorzugsweise datenselektive Koppelelemente zum Einsatz kommen, mit denen eine Steuerung und Reduzierung der zu übertragenden Datenmengen möglich ist. An den Automatisierungsgeräten 9 und 10 sind Mittel 11 zur Prozeßbeeinflussung, beispielsweise ein- und ausschaltbare Antriebe, sowie zur Erfassung von Zuständen des laufenden Prozesses, beispielsweise Meßwertgeber angeschlossen.

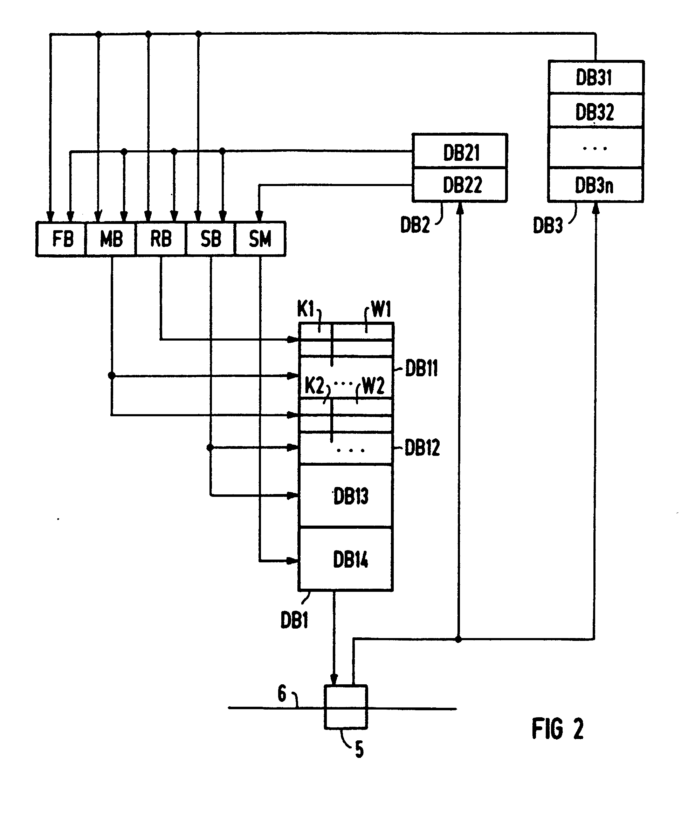

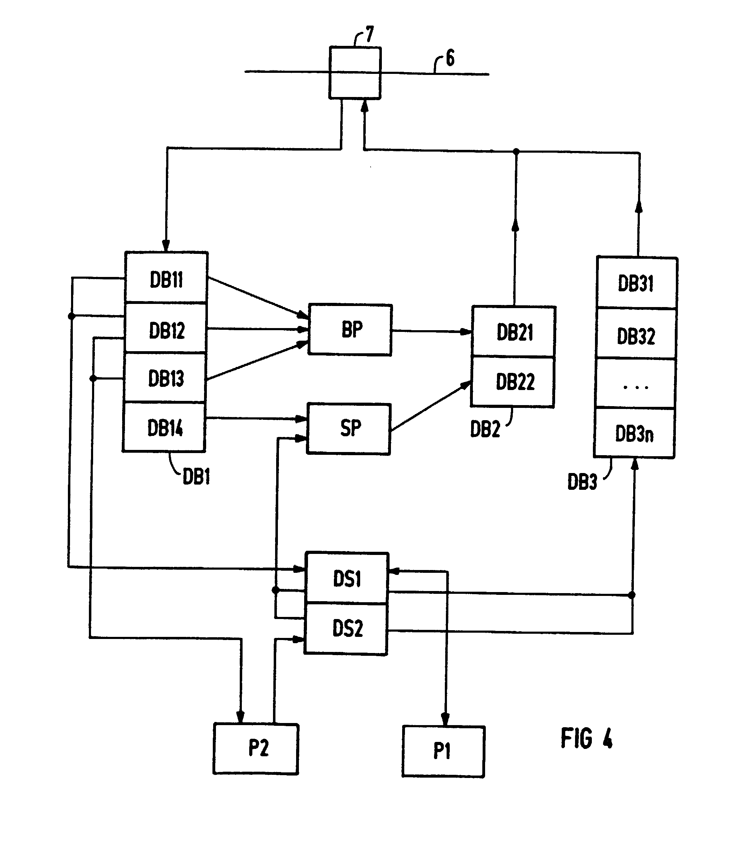

FIG 2 zeigt eine Struktur für die Behandlung von Daten in der Bedien- und Beobachtungsebene, also der Leiteinheit 1 mit den daran angeschlossenen Ein- und Ausgabegeraten 2,3 und 4. Auf dem Monitor 2 lassen sich zur Beobachtung des Prozesses Fließbilder FB, Meßwertgruppenbilder, MB, Regelkreisbilder RB, Steuerungsbilder SB und Störungsmeldungen SM darstellen. Die einzelnen Bilder können, wie FIG 3 zeigt, direkt durch Eingabe eines entsprechenden Namens, oder durch hierarchische Anwahl aus einem jeweils übergeordneten Bild heraus sowie innerhalb eines bestimmten Bildtyps, wie z.B. Regelkreisbild RB, durch blättern in Bildern des gleichen Typs aufgerufen werden. Die Steuerungsbilder SB, die mittels eines Cursors oder durch Funktionstastenanwahl aus den Fließbildern FB aufgerufen werden können, sind selbst hierarchisch in Anlagenbereichsbilder SB1, Funktionsgruppenbilder SB2, Funktionseinheitenbilder SB3 und Meldebilder SB4 geordnet, in denen die hierarchische Struktur der Anlage ausgehend von den einzelnen Anlagenbereichen über Funktionsgruppen und Funktionseinheiten bis herunter zu den einzelnen zu bedienenden Verbrauchern jeweils in Form von Funktionsblöcken dargestellt ist. Wie im folgenden noch erläutert wird, erfolgt die Steuerung der Anlage aus diesen Steuerungsbildern SB heraus.

Wie FIG 2 zeigt, werden zur Prozeßbedienung Daten ereignisgesteuert in einem Datenbaustein DB1 über das Bussystem 6 zur Prozeßebene übertragen. In dem Datenbaustein DB1 sind die Daten zur Prozeßbedienung in Abhängigkeit von unterschiedlichen vorgegebenen Bedienarten blockweise in unterschiedliche Datenarten aufgeteilt und sortiert. Ein erster Block DB11 enthält zu übertragende numerische Werte Wl zur Bedienung von Meß- und Regelvorgängen, also bediente Meßwertgrenzen, Reglersollwerte, Reglerparameter, Reglerbetriebsarten und Meßbereichsänderungen. Diese numerischen Werte werden jeweils zusammen mit einer zugeordneten Kennung K1 für den zu bedienenden Verbraucher (Regler,Meßeinrichtung) in der Prozeßebene übertragen.

Ein zweiter Block DB12 enthält sonstige numerische Werte W2, wie z.B. Handstellwerte zur Bedienung von Steuervorgängen. Diese numerischen Werte W2 werden ebenfalls jeweils zusammen mit einer Kennung K2 für den zu bedienenden Verbraucher übertragen.

Ein dritter Block DB13 enthält als Daten dynamische Bits für binäre Schalthandlungen, wie z.B. das Ein- und Ausschalten von Antrieben.

Schließlich ist ein vierter Block DB14 vorhanden, in dem Daten zum Sperren oder Freigeben der Abgabe von Störmeldungen durch die einzelnen Automatisierungsgerate 9,10 in der Prozeßebene enthalten sind. Damit ist es möglich, vorübergehend die Abgabe von Störmeldungen zu verhindern, wenn z.B. wegen einer Reparatur an der betreffenden Stelle in der Anlage gearbeitet wird.

Die Daten zur Prozeßbedienung sind also blockweise sortiert in Daten zur Bedienung von Meß- und Regelvorgängen (Block DB11) und Daten zur Bedienung von Steuervorgängen (Blöcke DB12 und DB13), wobei letztere wiederum in numerische Daten (Block DB12) und binäre Daten (Block DB13) unterteilt sind. Innerhalb der Blöcke sind die Daten durch Kennungen nach den zu bedienenden Anlagenbereichen, Funktionsgruppen und Funktionseinheiten sortiert.

Wie FIG 2 zu entnehmen ist, dienen die verfahrenstechnischen Fließbilder FB lediglich zur Visualisierung des Prozeßgeschehens und zur Anwahl von Steuerungsbildern SB,SB1,SB2, SB3 und SB4 (FIG 3). Eine Prozeßbedienung aus den Fließbildern FB heraus ist dagegen nicht vorgesehen.

Aus den Meßwertgruppenbildern MB, in denen Meßwerte aus der Prozeßebene dargestellt werden, erfolgt eine Bedienung von Meßstellen in der Prozeßebene. Dazu werden in dem Datenblock DB11 beispielsweise Meßwertbereiche in Form von numerischen Werten für die jeweils untere und obere Meßwertgrenze sowie Befehlsdaten zur Freigabe oder zum Sperren der Abgabe von Meßwerten übertragen. Sonstige numerische Werte, wie z.B. Korrekturwerte werden in den Datenblock DB12 übertragen.

Eine Bedienung von Regelvorgängen in der Prozeßebene erfolgt aus den Regelkreisbildern RB heraus, in denen die entsprechenden Regler mit den relevanten Größen wie Reglerbetriebsart, Reglerparameter, Sollwerte und Istwerte dargestellt sind. Daten zur Änderung bzw. Einstellung dieser Größen werden als numerische Werte in dem Datenblock DB11 und sonstige Daten, wie z.B. Korrekturwerte in dem Datenblock DB12 übertragen.

Während die Bedienung von Meß- und Regelvorgängen in der Anlage aus den Meßwertgruppenbildern MB und Regelkreisbildern RB herauserfolgt, wird die Anlage bezüglich steuerungstechnischer Eingriffe in den Prozeß, d.h. bezüglich der Steuerung des Prozesses ausschließlich aus den Steuerungsbildern SB heraus gefahren. Wie bereits erwähnt, können die einzelnen Steuerungsbilder SB,SB1-SB4 aus dem Fließbild FB heraus, durch Eingabe von Steuerungsbildnamen, aus den in der Hierarchie der Steuerungsbilder jeweils über- oder untergeordneten Steuerungsbildern heraus, durch Blättern in den Steuerungsbildern innerhalb einer Hierarchieebene oder durch Anwahl des entsprechenden Antriebs im Fließbild mittels eines Cursors angewählt werden. Das Ein- und Ausschalten von Anlagenbereichen, Funktionsgruppen und Funktionseinheiten der Anlage erfolgt aus den zugehörigen Steuerungsbildern heraus, wobei die Befehle für die Schalthandlungen in Fom von dynamischen Bits in dem Datenblock DB13 übertragen werden. Darüber hinaus werden numerische Eingaben, beispielsweise in Form von Handstellwerten in den Datenblock DB12 übertragen.

Die Befehle zum Sperren oder Freigeben von Störmeldungen werden, wie bereits erläutert, in dem Datenblock DB14 des Datenbausteins 1 übertragen.

Der Datenbaustein DB1 mit den vorsortierten Daten wird über das Koppelelement 5 und das Bussystem 6 zur Prozeßebene übertragen.

FIG 4 zeigt die Datenbehandlung in der Prozeßebene. Über das Koppelelement 7 wird der Datenbaustein DB1 empfangen. Die numerischen Meßwertgrenzen und Reglerwerte in dem Datenblock DB11 und die sonstigen zur Bedienung von Meß- und Regelvorgangen dienenden numerischen Werte in dem Datenblock DB12 werden in einem Datenspeicher DS1 abgelegt, auf den ein technologisches Anwenderprogramm P1 zum Ausführen von Meß- und Regelvorgängen in der Prozeßebene Zugriff hat. Dabei werden auch Daten aus dem Anwenderprogramm P1 in den Datenspeicher DS1 zurückgeschrieben, um für Prozeßregelungen einen geschlossenen Regelkreis zu erhalten.

Die zur Steuerung des Prozesses dienenden Daten, nämlich die dynamischen Bits für die Schaltvorgänge in dem Datenblock DB13 und die zur Steuerung dienenden numerischen Werte in dem Datenblock DB12 werden einem technologischen Anwenderprogramm P2 zugeführt, das ausschließlich zur Ausführung von Steuerungsvorgängen dient. Die Ergebnisse der Steuerungsvorgänge werden aus dem Anwenderprogramm P2 in einen weiteren Datenspeicher DS2 abgespeichert. Durch die Vorsortierung der Daten zum einen in Anpassung an die Struktur der einzelnen Bilder in der Bedien- und Beobachtungsebene, aus denen die Prozeßbedienung heraus erfolgt, und zum anderen an die strenge Trennung von Meß- und Regelvorgängen und Steuerungsvorgängen in der Prozeßebene wird ein schneller Zugriff auf die Daten in der Prozeßebene erreicht. Darüber hinaus sind die Daten durch die ihnen zugeordneten Kennungen, z.B. K1,K2 nach Anlagenbereichen, Funktionsgruppen, und Funktionseinheiten der Anlage sortiert, so daß insgesamt außer einem schnellen Zugriff auch eine an Änderungen und Erweiterungen in der Anlage leicht anpaßbare und in bezug auf die Anlagenstruktur transparente Datenstruktur erhalten wird.

Bediente Werte und Schalthandlungen sowie Störmeldungen werden als ereignisgesteuerte Daten in einem Datenbaustein DB2 von der Prozeßebene zur Bedien- und Beobachtungsebene übertragen. Damit wird der Erhalt von Befehlen bzw. Daten zur Prozeßbedienung bestätigt. Hierzu hat ein Bedienprotokollprogramm PB Zugriff auf die zur Prozeßbedienung in die Prozeßebene übertragenen numerischen Werte in den Datenblöcken DB11 und DB12 und die Daten für die Schalthandlungen in dem Datenblock DB13 des Datenbausteins DB1. Den vorsortierten Daten werden Bedienprotokollnummern aus vorgegebenen Nummernbereichen zugeordnet, wodurch eine Umbewertung der Daten für ihre Übertragung in die Bedien- und Beobachtungsebene erfolgt. Die so umbewerteten Daten werden in einem Datenblock DB21 des Datenbausteins DB2 übertragen.

Zur Erfassung von Störungen dient ein Störmeldeprogramm SP, das auf die Daten in den Datenspeichern DS1 und DS2 zugreift und die Daten analysiert. Beispielsweise werden numerische Daten auf Verletzung von vorgegebenen Grenzwerten hin überwacht. Wenn die Abgabe von Störungsmeldungen aufgrund der Befehlsdaten in dem Datenblock DB14 freigegeben ist, werden die Störungsmeldungen in einem Datenblock DB22 des Datenbausteins DB2 zur Bedien- und Anzeigeebene übertragen.

Wie FIG 2 zeigt, werden in der Bedien- und Beobachtungsebene die in dem Datenblock DB21 enthaltenen umbewerteten Daten für die Prozeßbedienung in den Fließbildern FB, Meßwertgruppenbildern MB, Regelkreisbildern RB und Steuerungsbildern SB visualisiert und über den Drucker 4 als Bedienprotokoll ausgegeben. Die Störungsmeldungen in dem Datenblock DB22 werden durch das Störmeldesystem SM zur Anzeige gebracht.

Während bediente Werte und Schalthandlungen in dem Datenbaustein DB2 ereignisgesteuert übertragen werden, werden die in den Datenspeichern DS1 und DS2 enthaltenen, den aktuellen Prozeßzustand beschreibenden Daten in einem weiteren Datenbaustein DB3 von der Prozeßebene zyklisch zur Bedien- und Beobachtungsebene übertragen und dort in den Fließbildern FB, Meßwertgruppenbildern MB, Regelkreisbildern RB und Steuerungsbildern SB dargestellt. Um die Zuordnung der Daten zu den einzelnen Bildern zu vereinfachen und zu beschleunigen, sind die Daten in dem Datenbaustein DB3 in Abhängigkeit von unterschiedlichen Zustandsarten, wie Antriebszustände, Meßwerte, Reglerwerte usw. unterteilt und in Datenblöcken DB31 bis DB3n vorsortiert.

## Patentansprüche

1. Prozeßleitverfahren, insbesondere für eine industrielle Großanlage, wobei zur Prozeßbedienung Daten von Bedienmitteln (3) in einer Bedien- und Beobachtungsebene über ein Bussystem (6) zu Automatisierungsgeraten (9,10) in einer Prozeßebene übertragen werden und zur Prozeßbeobachtung Daten von den Automatisierungsgeräten (9,10) in der Prozeßebene zu Anzeigemitteln (2,4) in der Bedien- und Beobachtungsebene übertragen werden, **dadurch gekennzeichnet**, daß die Daten zur Prozeßbedienung in Abhängigkeit von unterschiedlichen vorgegebenen Bedienarten in unterschiedliche Datenarten unterteilt und nach diesen blockweise sortiert von der Bedien- und Anzeigeebene zur Prozeßebene übertragen werden, und daß in den Automatisierungsgeraten (9,10) enthaltene Programme (P1,P2) zur Ausführung der jeweiligen Bedienung auf die vorsortierten Daten zugreifen, wobei die Prozeßbedienung aus unterschiedlichen, in der Bedien- und Beobachtungsebene zur Anzeige gebrachten Bildern (MB,RB,SB) der Anlage heraus erfolgt und wobei unterschiedlichen Bildtypen (MB,RB,SB) entsprechende unterschiedliche Bedienarten oder -möglichkeiten zugeordnet sind, und wobei die Daten zur Prozeßbedienung in Abhängigkeit von den Bildtypen, (MB,RB,SB) und den ihnen zugeordneten Bedienarten sortiert sind.

2. Prozeßleitverfahren nach Anspruch 1, **dadurch gekennzeichnet**, daß die Daten zur Prozeßbedienung in solche für Meß- und Regelvorgänge und solche für Steuervorgänge unterteilt werden.

3. Prozeßleitverfahren nach Anspruch 1 oder 2, **dadurch gekennzeichnet**, daß die Daten zur Prozeßbedienung in solche für zu übertragende numerische Werte und solche für binäre Schalthandlungen unterteilt werden.

4. Prozeßleitverfahren nach einem der vorangehenden Ansprüche, **dadurch gekennzeichnet**, daß die Daten innerhalb der Blöcke (DB11,DB12,DB13,DB14) durch Kennung (K1,K2) in Abhängigkeit von der Struktur der Anlage sortiert werden.

5. Prozeßleitverfahren nach einem der vorangehenden Ansprüche, **dadurch gekennzeichnet**, daß den zur Prozeßbedienung in die Prozeßebene übertragenen vorsortierten Daten dort Bedienprotokollnummer zugeordnet werden und daß die Daten mit den Bedienprotokollnummern in die Bedien- und Beobachtungsebene zurückübertragen werden.

6. Prozeßleitverfahren nach einem der vorangehenden Ansprüche, **dadurch gekennzeichnet**, daß in der Prozeßebene den Prozeßzustand beschreibende Daten in Abhängigkeit von unterschiedlichen vorgegebenen Zustandsarten unterteilt werden und nach den Zustandsarten blockweise sortiert zyklisch zur Bedien- und Beobachtungsebene übertragen werden.

7. Prozeßleitverfahren nach Anspruch 6, **dadurch gekennzeichnet**, daß in der Bedien- und Beobachtungsebene zur Prozeßbeobachtung unterschiedliche Bildtypen (FB,MB,RB,SB) für unterschiedliche Zustandsarten erzeugt werden und daß die von der Prozeßebene zur Bedien- und Beobachtungsebene zyklisch übertragenen Daten nach den den unterschiedlichen Bildtypen zugeordneten Zustandsarten sortiert sind.

## Claims

1. Process control method, in particular for a large-scale industrial plant, data being transmitted for operator process control from operator-control means (3) at an operator-control and monitoring level via a bus system (6) to programmable controllers (9, 10) at a process level and data being transmitted for process monitoring from the programmable controllers (9, 10) at the process level to display means (2, 4) at the operator-control and monitoring level, **characterised in that** the data for operator process control are divided up in accordance with various specified types of operator control into various types of data and are transmitted as data sorted according to these types on a block-by-block basis from the operator-control and display level to the process level, and in that to carry out the respective operator control, the programs (P1, P2) contained in the programmable controllers (9, 10) access the pre-sorted data, the operator process control is effected from different diagrams (MB, RB, SB) of the plant displayed at the operator-control and monitoring level, and different types or possibilities of operator control being assigned to corresponding different types of diagrams (MB, RB, SB), the data for operator process control being sorted in accordance with the diagram types (MB, RB, SB) and the operator control types assigned to them.

2. Process control method according to Claim 1, characterised in that the data for operator process control are subdivided into those for measuring and closed-loop control operations and those for open-loop control operations.

3. Process control method according to Claim 1 or 2, **characterised in that** the data for operator process control are subdivided into those for numerical values to be transmitted and those for binary switching operations.

4. Process control method according to one of the preceding Claims, **characterised in that** the data are sorted within the blocks (DB11, DB12, DB13, DB14) with the aid of identifiers (K1, K2) in accordance with the configuration of the plant.

5. Process control method according to one of the preceding Claims, **characterised in that** the operator-control protocol numbers are assigned to the pre-sorted data transmitted for operator process control into the process level and that the data are retransmitted with the operating protocol numbers into the operator-control and monitoring level.

6. Process control method according to one of the preceding Claims, **characterised in that** data describing the process state are subdivided at the process level according to different specified state types and transmitted cyclically to the operator-control and monitoring level as data sorted on a block-by-block basis in accordance with the state types.

7. Process control method according to Claim 6, **characterised in that** for monitoring the process at the operator-control and monitoring level, various types of diagrams (FB, MB, RB, SB) are produced for various state types and in that the data transmitted cyclically from the process level to the operator-control and monitoring level are sorted in accordance with the state types assigned to the different diagram types.

## Revendications

1. Procédé de gestion d'opérations, notamment pour une grande installation industrielle, des données étant, pour la commande des opérations, transmises, par l'intermédiaire d'un système (6) de bus, de moyens (3) de commande situés à un niveau de commande et d'observation à des appareils (9,10) d'automatisation situés à un niveau opérationnel et des données étant, pour l'observation des opérations, transmises des appareils (9,10) d'automatisation situés au niveau opérationnel à des moyens (2,4) d'affichage situés au niveau de commande et d'observation, caractérisé en ce que l'on subdivise les données pour la commande des opérations en fonction de différents genres de commandes prescrits en différents genres de données et en ce que suivant ces genres de données, on les transmet au niveau opérationnel triées par bloc par le niveau de commande et d'affichage, et en ce que des programmes (P1, P2) contenus dans les appareils (9,10) d'automatisation, accèdent aux données prétriées pour réaliser la commande associée, la commande des opérations s'effectuant à partir de différentes images (MB,RB,SB) de l'installation affichées au niveau de commande et d'observation et des genres ou des possibilités de commande différentes correspondante étant associées aux types (MB,RB,SB) d'images différentes, et les données étant, pour la commande des opérations triées en fonction des types (MB,RB,SB) d'images et des genres de commande qui leurs sont associés.

2. Procédé de gestion d'opérations suivant la revendication 1, caractérisé en ce que l'on subdivise les données pour la commande opérationnelle en données pour des opérations de mesure et de régulation et en données pour des opérations de commande.

3. Procédé de gestion d'opérations suivant la revendication 1 ou 2, caractérisé en ce que l'on subdivise les données pour la commande opérationnelle en données pour des valeurs numériques à transmettre et en données pour des manipulations de commande binaire.

4. Procédé de gestion d'opérations suivant l'une des revendications précédentes, caractérisé en ce qu'on trie les données dans des blocs (DB11, DB12, DB13, DB14) en les caractérisant (K1,K2) en fonction de la structure de l'installation.

5. Procédé de gestion d'opérations suivant l'une des revendications précédentes, caractérisé en ce qu'on associe aux données prétriées, transmises au niveau opérationnel pour la commande opérationnelle, des numéros de protocole de commande à ce niveau et en ce que l'on retransmet les données comportant les numéros de protocole de commande au niveau de commande et d'observation.

6. Procédé de gestion d'opérations suivant l'une des revendications précédentes, caractérisé en ce que, au niveau opérationnel, on subdivise des données décrivant l'état des opérations en fonction de différents genres d'état prescrits et en ce que, suivant les genres d'état, on les transmet triés par blocs, par cycle, au niveau de commande et d'observation.

7. Procédé de gestion d'opérations suivant la revendication 6, caractérisé en ce que, l'on produit au niveau de commande et d'observation, pour l'observation des opérations, différents types (FB,MB,RB,SB) d'images pour différents genres d'état et en ce que l'on trie les données transmises cycliquement par le niveau opérationnel au niveau de commande et d'observation, suivant les genres d'état associés aux différents types d'images.
